# EUROPEAN PATENT APPLICATION

(11) **EP 4 462 628 A1**
(43) Date of publication of application: **13.11.2024**
(21) Application number: 23172977.3
(22) Date of filing: 11.05.2023
(51) Int. Cl.: H02J 3/26

(54) **PROCESSING SYSTEM AND PROCESSING METHOD FOR DISTRIBUTION SYSTEM CONTROL, AND SYSTEM COMPRISING A DISTRIBUTION GRID**

(71) Applicant: Hitachi Energy Germany AG, 68309 Mannheim (DE)
(72) Inventor: Schmitt, Susanne, 69115 Heidelberg (DE); Giuntoli, Marco, 64521 Groß-Gerau (DE); Subasic, Milos, 68161 Mannheim (DE); Merkert, Lennart, 69115 Heidelberg (DE)
(74) Representative: Meier, Florian

(57) **Abstract**

Processing methods and processing systems (20) are provided which are operative to determine settings based on optimal power flow processing (31) at the distribution level.

## Description

### TECHNICAL FIELD

Embodiments of the invention relate to systems and methods to perform processing operations related to a distribution grid. Embodiments of the invention relate in particular to systems and methods useful for determining control setpoints for distribution system components.

### BACKGROUND

Power grids are important infrastructure components. Power grids include a transmission grid and one or several distribution grids.

While techniques for an automatic determination of control setpoints for transmission systems is rather well developed, control setpoints at the distribution level are frequently still determined using distribution grid operator policies. While such an approach may be adequate for conventional distribution systems, the increasing penetration with renewables and other changes associated with a transition to greener, more environmentally friendly power systems poses new challenges for distribution grid operation. For illustration, the increasing number of distributed energy resources (DERs) and/or loads (e.g., electric vehicle (EV) charging stations) on the distribution level has the potential to cause problems in distribution grids including overloads and voltage range deviations, which may lead to asset damage and potential blackouts.

Besides the fact that the low complexity of legacy distribution systems did not require advanced techniques of determining distribution system settings to be applied, an additional challenge with implementing techniques of identifying good operating settings for a distribution system is the wide variety of implementation options that may exist, not only relating to topology, but also relating to the number of phases of lines, feeders, and other equipment.

To mitigate or avoid potentially damaging situations in distribution system operation, it is desirable to identify operation settings (such as control setpoints) for a distribution system. This task is exacerbated by the increasing complexity of distribution grids and the distribution system equipment connected thereto. Operation control strategies that rely on distribution system operator policies and strategies alone may be sub-optimal in various situations.

### SUMMARY

It is an object of the invention to provide methods, devices, and/or systems that provide enhanced techniques of determining operation settings for a distribution system. It is an optional object of the invention to provide methods, devices, and/or systems that can determine which control setpoints are optimum (in accordance with objective criteria), thereby assisting in distribution system control. It is an optional objective of the invention to provide methods, devices, and/or systems operative to determine control setpoints that can be used in association with a wide variety of distribution systems, such as distribution systems having parts with various numbers of phases.

According to exemplary embodiments, methods and systems as recited in the claims are provided. The dependent claims define preferred or advantageous embodiments.

According to an aspect of the invention, there is provided a processing system for distribution grid control. The processing system comprises a storage system operative to store topology data for the distribution grid. The processing system comprises at least one processing circuit operative to retrieve the topology data from the storage system, identify phases for branches and nodes of the distribution grid, perform an optimal power flow (OPF) processing to solve an OPF problem of determining distribution system settings that optimize a target function of the OPF problem, wherein the OPF processing is performed based on the topology data and the identified phases, and generate output that is provided via at least one output interface of the processing system based on the determined distribution system settings.

Various effects and advantages are attained by the processing system. The processing system can assist a distribution system operator (DSO) in the complex task of determining operation settings, such as control setpoints. By using the OPF, processing techniques that are well established at the transmission level can be harnessed to determine the operation settings.

The at least one processing circuit may be operative to enable a number of phases to be specified for performing the OPF processing.

This configuration provides the effect that the operation settings can be determined for the specified number of phases (which may include a number of phases for various branches and/or various nodes), making the processing system applicable to distribution systems having different numbers of phases or having sections with different numbers of phases.

The processing system may further comprise an input interface. The at least one processing circuit may be operative to control the input interface to enable a distribution grid operator to configure a number of the phases for each branch and for each node.

This configuration provides the effect that the number of phases can be specified in a simple manner for the respective distribution system.

The at least one processing circuit may be operative to identify the phases based on a machine-readable configuration description of the distribution grid.

This configuration provides the effect that the risk of human-introduced errors is reduced further.

The machine-readable configuration description may be a proprietary configuration description or a standardized configuration description (SCD), e.g., a SCD compatible with IEC 61850 (e.g., IEC 61850 as in force on the filing or priority date of the application).

This configuration provides the effect that the configuration description can be processed using techniques established for, e.g., IEC 61850-conformant SCDs.

The at least one processing circuit may be operative to determine admittances of lines of the distribution grid based on the identified phases and one, several or all of the following parameters of the lines: electrical characteristics; geometric characteristics; materials; relative distance to ground.

This configuration provides the effect that determination of the admittance matrix (for use in power flow processing in the OPF processing) is further automated. The processing system does not require line admittances as explicit input for all lines but can determine the line admittance(s) for distribution line(s) using, e.g., a material, relative distance to ground, and geometrical characteristics such as diameter and length.

The at least one processing circuit may be operative to perform the OPF processing based on the determined admittances.

This configuration provides the effect that processing techniques that are well established in the context of transmission systems may be applied at the distribution level.

The storage system may be operative to store a set of power equipment models related to an equipment of the distribution grid, wherein the processing system may be operative to select a power equipment model from the set of power equipment models based on a configuration of the distribution grid.

This configuration provides the effect that various implementations of power equipment connected to the distribution grid can be modeled and taken into consideration when determining the operating parameters.

The at least one processing circuit may be operative to perform the OPF processing based on the selected power equipment model.

This configuration provides the effect that various implementations of power equipment connected to the distribution grid can be modeled and taken into consideration when determining the operating parameters.

The equipment of the distribution grid may be selected from a group consisting of a multi-phase power transformer, a connection of a load in a distribution feeder, a connection of a generator in a distribution feeder, a load, a generator.

This configuration provides the effect that OPF processing can be performed for distribution systems having a wide variety of different power equipment connected to the distribution grid.

The distribution grid may comprise time-coupling equipment that is intermittently connected via a feeder. The at least one processing circuit may be operative such that the determined distribution system settings comprise settings for the time-coupling equipment.

This configuration provides the effect that equipment coupled to the distribution system in a time-varying manner may be taken into consideration, with the optimization extending to the settings for the time-coupling equipment. Such time-coupling equipment is getting more important with the transition to more environmentally friendly, greener power systems. Thus, the processing system assists in finding operation settings for a distribution system that includes equipment such as electric vehicle (EV) charging stations or energy storage systems (ESSs), such as kinetic energy (e.g., flywheel) or battery ESSs.

The time-dependent coupling equipment may comprise at least one of an energy storage system, an electromobility charging equipment.

This configuration provides the effect that the processing system is operative for use with distribution systems that include equipment important for ensuring a transition to more environmentally friendly, greener power systems.

The settings for the time-coupling equipment may comprise settings for a connection and disconnection of the time-coupling equipment.

This configuration provides the effect that the processing system is operative to determine the time-dependent settings for time coupling equipment, which is important for ensuring a transition to more environmentally friendly, greener power systems.

The OPF processing may comprise a multi-period OPF processing, wherein the at least one processing circuit may be operative to perform a time-domain decomposition of the OPF problem into multiple periods to determine the settings for the time-coupling equipment.

This configuration provides the effect that the at least one processing circuit can identify settings for the time-coupling equipment in a systematic manner.

The at least one processing circuit may be operative to solve the multi-period OPF sequentially for the multiple periods.

This configuration provides the effect of lower computational complexity. The solutions for the multiple periods may be linked to each other, e.g., using forward and backward consistency checks to ensure that the operation settings at an end of one period are not inconsistent with operation settings at the start of the subsequent period.

The at least one processing circuit may be operative to solve the multi-period OPF in parallel for the multiple periods.

This configuration provides the effect of ensuring consistency of the settings for the various periods.

The at least one processing circuit may be operative such that the determined distribution system settings may comprise discrete settings.

This configuration provides the effect that the processing system may be used to determine operation settings for distribution systems that have control setpoints selected from a discrete, noncontinuous value set. Tap changers are an example of such equipment.

The at least one processing circuit may be operative to determine optimum values for the discrete settings using an iterative technique comprising iterations over allowed values for the discrete settings.

This configuration provides the effect of tackling the task of identifying the optimum values for discrete control setpoints in a systematic manner.

The iterative technique may comprise a nested iterative technique, wherein the nested iterative technique comprises an outer iteration over the allowed values for the discrete settings and an inner iteration.

This configuration provides the effect of tackling the task of identifying the optimum values for discrete control setpoints in a systematic manner.

The at least one processing circuit may be operative to perform the inner iteration to determine optimum values for settings that have continuous allowed values.

This configuration provides the effect of tackling the task of identifying the optimum values for discrete control setpoints in a systematic manner.

The at least one processing circuit may be operative to perform the inner iteration while keeping the values for the discrete settings fixed.

This configuration provides the effect of tackling the task of identifying the optimum values for discrete control setpoints in a systematic manner.

The at least one processing circuit may be operative to perform at least two different optimization procedures in the OPF processing.

This configuration provides the effect that a selection may be made (e.g. automatically by the at least one processing circuit or by enabling a distribution system operator selection via a human machine interface (HMI)) on which OPF processing technique is to be used. The selection may be based on requirements on result quality and speed at which the operation settings are provided.

The processing system may be operative to enable a selection of an optimization procedure from the at least two different optimization procedures.

This configuration provides the effect that distribution system operator preferences are taken into account when balancing result quality with speed.

The determined settings may comprise setpoints for distribution grid equipment.

This configuration provides the effect that control setpoints may be determined using the processing system.

The setpoints may comprise generator unit commitment and/or setpoints for time-coupling equipment.

This configuration provides the effect that the processing system is useful in association with distribution systems comprising renewable energy resources (such as inverter based resources (IBRs)) and/or time-coupling equipment such as EV charging stations.

The processing system may be operative to enable or effect control of the distribution system in accordance with the determined distribution system settings.

This configuration provides the effect that at least some of the distribution system settings may be applied automatically. This further reduces the risk of human-introduced errors.

The processing system may be configured such that the output comprises commands operative to cause distribution grid equipment of the distribution grid to operate in accordance with the determined distribution system settings.

This configuration provides the effect that at least some of the distribution system settings may be applied automatically. This further reduces the risk of human-introduced errors.

The processing system may be configured such that the output comprises commands that control an HMI to provide output determined based on the distribution system settings.

This configuration provides the effect that information on the optimum settings can be provided to a distribution system operator.

According to another aspect of the invention, there is provided a distribution system control system comprising the processing system according to an embodiment, wherein the distribution grid control system has an output interface operative to output commands that cause distribution system equipment to operate in accordance with the determined distribution system settings.

This control system provides the effect of providing improved control at the distribution level.

According to another aspect of the invention, there is provided a system comprising at least one controllable distribution system equipment and the distribution system control system operative to control the at least one controllable distribution system equipment.

The at least one controllable distribution system equipment may comprise time coupling equipment (such as an ESS and/or EV charging station) and/or controllable feeders (such as feeders for photovoltaic (PV) or wind energy resources).

This configuration provides the effect that the processing system is useful in association with distribution systems comprising renewable energy resources (such as inverter based resources (IBRs)) and/or time-coupling equipment such as EV charging stations.

According to another aspect of the invention, there is provided a system comprising a distribution grid, and a distribution grid control system comprising the processing system according to an aspect of embodiment of the invention.

The distribution grid may comprise distribution grid equipment operative to operate in accordance with the output provided by the processing system.

The system may further comprise distribution system equipment coupled to the distribution grid and comprising time coupling equipment (such as an ESS and/or EV charging station) and/or controllable feeders (such as feeders for photovoltaic (PV) or wind energy resources).

This configuration provides the effect that the processing system is useful in association with distribution systems comprising renewable energy resources (such as inverter based resources (IBRs)) and/or time-coupling equipment such as EV charging stations.

According to another aspect of the invention, there is provided a processing method, comprising retrieving, by at least one processing circuit, topology data for a distribution grid; identifying, by the at least one processing circuit, phases of the distribution grid; performing, by the at least one processing circuit, an OPF processing to determine distribution grid control setpoints, wherein the OPF processing is performed based on the topology data and the identified phases; and generating, by the at least one processing circuit, output provided via at least one output interface for control of the distribution grid, the output being based on the determined distribution grid control setpoints.

Various effects and advantages are attained by the processing system. The processing system can assist a distribution system operator (DSO) in the complex task of determining operation settings, such as control setpoints. By using the OPF, processing techniques that are well established at the transmission level can be harnessed to determine the operation settings.

The method may further comprise enabling, by the at least one processing circuit, a number of phases to be specified for performing the OPF processing.

This configuration provides the effect that the method is applicable to distribution system having different numbers of phases.

Additional optional features of the processing method correspond to the features disclosed in association with the processing system.

The method may be performed by the processing system according to an aspect or embodiment or using the processing system according to an aspect or embodiment.

The effects attained thereby correspond to the features disclosed in association with the processing system.

A control method according to an embodiment comprises performing the processing method to determine distribution system settings and causing, by a control system, distribution system equipment to operate in accordance with the determined distribution system settings.

The control method may be performed automatically by a distribution system control system, e.g., by the distribution system control system of any aspect or embodiment disclosed herein.

According to further embodiments, there is provided machine-readable instruction code which, when executed by at least one programmable circuit, causes the at least one programmable circuit to perform the processing method, the control method, or the operation method according to any aspect or embodiment disclosed herein.

According to further embodiments, there is provided a non-transitory storage medium having stored thereon machine-readable instruction code which, when executed by at least one programmable circuit, causes the at least one programmable circuit to perform the processing method, the control method, or the operation method according to any aspect or embodiment disclosed herein.

Various effects and advantages are attained by embodiments of the invention. For illustration, the systems and methods provide enhanced techniques of determining operation settings for a distribution system. The systems and methods are capable of determining which control setpoints are optimum (in accordance with objective criteria), thereby assisting in distribution system control. The systems and methods are operative to determine control setpoints that can be used in association with a wide variety of distribution systems, such as distribution systems having parts with various numbers of phases.

The systems and methods can be used in association with an electric power grid having renewable energy sources and/or battery-based or mechanical energy storage systems (or other loads coupled to the distribution grid in a time-dependent, controllable manner), without being limited thereto.

### BRIEF DESCRIPTION OF THE DRAWINGS

Embodiments of the invention will be described with reference to the drawings in which similar or identical reference signs designate elements with similar or identical configuration and/or function.
Figure 1 is a block diagram of a processing system.
Figure 2 is a diagram of a system comprising the processing system.
Figure 3 is a block diagram of processing circuit(s) of the processing system.
Figure 4 is a diagram of a system comprising the processing system.
Figure 5 is a flow chart of a method.
Figure 6 is a diagram illustrating models stored by the processing system.
Figure 7 is a diagram illustrating optimal power flow (OPF) processing schemes stored by the processing system.
Figure 8 is a flow chart of a method.
Figure 9 is a diagram illustrating determination of control setpoints of time-coupling equipment.
Figure 10 is a diagram illustrating determination of control setpoints of time-coupling equipment.
Figure 11 is a flow chart of a method.
Figure 12 is a diagram illustrating models stored by the processing system.
Figure 13 shows a feeder configuration for which a model can be stored and used by the processing system.
Figure 14 shows another feeder configuration for which a model can be stored and used by the processing system.
Figure 15 is a block diagram of a system comprising the processing system.

### DETAILED DESCRIPTION OF EMBODIMENTS

Embodiments of the invention will be described with reference to the drawings. In the drawings, similar or identical reference signs designate elements with similar or identical configuration and/or function.

While embodiments will be described in association with processing systems and methods of determining control setpoints of generators, loads, energy storage systems (ESSs), and/or electric vehicle (EV) charging stations, the embodiments are not limited thereto. The techniques disclosed herein may be used to determine other settings, such as a timing of other time-dependent coupling equipment. The determined setpoints or other settings may be applied to modify the operation of a distribution system under control of a distribution system control system.

While embodiments will be described in association with a distribution grid having power generating units comprising renewable energy resources, the embodiments are not limited thereto.

In accordance with the invention, there are provided processing systems, processing methods, control methods and control systems for determining settings (such as setpoints) for a power distribution system (i.e., for at least some of the distribution system equipment).

By using optimal power flow (OPF) techniques to determine settings for the power distribution system, the processing methods, processing systems, control methods and control systems disclosed herein determine the setpoints based on an objective criterion.

Methods and systems disclosed herein are operative to determine settings (such as setpoints) for generators and/or loads that resolve an identified congestion. As used herein, the terms "determining" and "determine" encompass an approximate determination of the respective quantity, such as an estimation of the respective quantity.

As used herein, "optimal" power flow processing refers to the determination of settings (such as control setpoints) that cause a target function to be minimum or maximum (depending on the specific implementation of the target function). The optimization is typically a constrained optimization, to find the settings that cause the target function to be optimum (maximum or minimum) while at the same time complying with the constraints. The optimization does not need to find a true global optimum but can also find settings that cause the target function to be close to or at a local maximum or minimum (while respecting the constraints). In the art, the term "objective function" is also used for the quantity referred to herein as "target function." I.e., the term "target function" as used herein may in particular be an objective function, and vice versa.

As used herein, a "power flow processing" can comprise processing that solves full nonlinear power flow equations. Linearization techniques may optionally be used, in order to balance quality of the determined settings with processing speed.

As used herein, "distribution system settings" can comprise control setpoints for distribution grid components and/or control setpoints for equipment coupled to the distribution grid (such as generators, controllable loads, ESSs).

The techniques disclosed herein are operative to facilitate operation of a distribution grid by providing automated techniques of determining settings. As used herein, the term "distribution grid" encompasses in particular a distribution grid operative to transmit power at voltages of from 2kV to 220 kV, such as a high voltage distribution grid (where voltages are typically between 60 kV and 220 kV) or a medium voltage distribution grid (where voltages may be, e.g., between 6 kV and 60 kV).

As used herein, the term "distribution system" is used to refer to a system that comprises the distribution grid and equipment (such as generators, loads, time-coupling equipment) connected to the distribution grid, as well as the respective connection infrastructure (such as feeders, inverters, etc.).

As used herein, the term "power" refers to electric power unless explicitly stated otherwise.

The processing methods, processing systems, control methods and control systems disclosed herein may be applied to the entire distribution grid or any section of the distribution grid. A distribution grid may be broken up into various sections, with the OPF processing being performed for each of the various sections.

According to some embodiments, a processing system (which may be an optimal power flow based control system) is provided which is operative to solve the full nonlinear power flow equations both for the single-phase, bi-phase and three-phase parts of a distributions grid. The processing system may be operative to apply various OPF processing techniques, such as iterative Newton-Raphson, iterative voltage sweeping, and linearized fast non-iterative processing, to tackle the OPF problem.

The processing system may optionally be operative to determine settings for controlling time-coupling equipment of the distribution system, such as ESS and EV charging stations, by decomposing the time domain in multiple intervals using a decomposition technique (e.g., Nested Benders decomposition or another decomposition technique). The processing system may be operative to solve the decomposed problems in sequential or parallel manner. The processing system may be operative to cause the time coupling equipment to operate in accordance with the determined settings.

The processing system may optionally be operative to consider discrete-valued (e.g., binary or integer) decision variables in unbalanced 3-phase optimal power flow of a distribution system. To this end, the processing system may be operative to perform an iterative optimization algorithm. The 3-phase optimal power flow with fixed integer decision variables is iterated with one or more simplified models akin to an outer approximation considering the integer decisions.

The processing system may optionally be operative to determine settings for a variety of distribution system configurations. The processing system may be operative to perform the determination of settings, using OPF processing, for any one or any combination of:
- lines/cables comprising one, two or three phases with or w/o neutral (grounded or not);
- power transformer(s) connected in delta (open) or star(open) or star grounded configurations;
- loads connected to the distribution grid with single or multi phases with or w/o neutral;
- generators connected to the distribution grid with single or multi phases with or w/o neutral;

The processing system may optionally be operative such that multi phases active equipment can be controlled symmetrically (same power flow for each phase) or independently (different power flow for each phase).

Depending on the specific distribution grid, the processing system may be operative to use some or all of the features listed above, or a subset thereof.

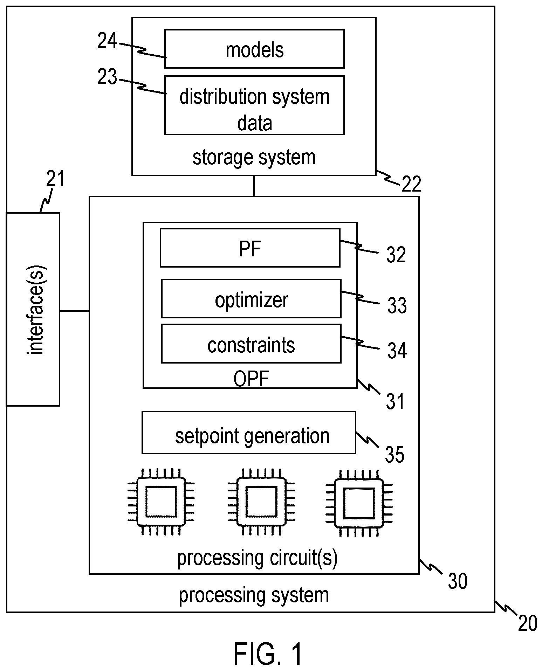

Figure 1 shows a processing system 20 operative to perform OPF processing 31 to determine settings for distribution system equipment, such as equipment connected to the distribution grid. The processing system 20 is operative to determine, based on distribution system data 23 and models 24, settings for controlling distribution system equipment (such as generators, loads, and/or time coupling equipment coupled to a distribution grid).

The distribution system data may include topology data and/or equipment data specifying the types of equipment, e.g., in the form of an lED 61850-compatible standardized configuration description. For illustration, the distribution system data may comprise a one phase equivalent diagram of the distribution system. The equipment data may comprise nameplate data. The processing system 20 may then be operative to determine allowed operation ranges for the equipment based on the nameplate data and a database that may be stored locally in a storage system 25 or remotely from the processing system 20. Alternatively or additionally, the equipment data may comprise information such as possible controls, allowed operational ranges (such as voltage or power ranges), or other data that can be used by the processing system 20 to determine settings for equipment coupled to a distribution grid and/or for distribution grid components, based on the OPF processing 31. The distribution system data may comprise SCD data (such as a standardized configuration language (SCL) file) received at at least one interface 21 of the processing system.

The processing system 20 may also be operative to enable the topology and/or additional information relating to the distribution grid (such as topology information) or distribution system equipment to be input. For illustration, the processing system 20 may comprise a human machine interface (HMI) or may be operative to control an HMI via the at least one interface 21. The processing system 20 may be operative to control the HMI to enable a number of phases to be specified via the HMI for one, some, or all of the lines of the distribution grid, and/or for feeders coupling equipment to the distribution grid. The processing system 20 may be operative to control the HMI to enable an input for one, some, or all of the lines of the distribution grid that indicates whether the respective lines are lines with or without neutral. The processing system 20 may be operative to control the HMI to enable an input for one, some, or all of the lines of the feeders connecting equipment to the distribution grid, with the input indicating whether the respective feeders are feeders with or without neutral.

This information on the number of phases of lines and/or feeders, and/or on whether the lines and/or feeders of the distribution system are with or without neutral, may be stored in the distribution system data 23 for subsequent use in determining setpoints. The information on the number of phases of lines and/or feeders of the distribution system, and/or on whether the lines and/or feeders are with or without neutral of the distribution system may also be received via the interface 21.

The models 24 include models for lines and equipment. The models 24 may comprise models for modeling the electric behavior of the lines and equipment comprised by the distribution system in association with which the processing system 20 is used. The models 24 may additionally include models for lines and equipment different from any of those present in the distribution system in association with which the processing system 20 is used. The models respectively applicable for performing the OPF processing 31 may be identified, based on the distribution system data (such as equipment nameplate information and information on the number of phases of lines and/or feeders of the distribution system, and/or on whether the lines and/or feeders are with or without neutral) for use in the OPF processing 31.

The OPF processing 31 may generally comprise at least one power flow (PF) solver 32 and an optimizer 33. The OPF processing 31 is operative to use the distribution system data to determine branches and nodes for performing the OPF processing 31 (e.g., by determining lines and nodes for setting up an admittance matrix, computing admittance matrix elements, and setting up the set of equations that describe the behavior of the power distribution system in the PF problem). The OPF processing 31 is generally operative to use the models 24 that are appropriate to model the equipment and lines as used in the specific distribution system in association with which the processing system 20 is used.

The OPF processing 31 is a technique having various implementations of which the skilled person is aware. The OPF processing 31 may generally include the PF solver 32 (which solves the PF equations for any given set of settings) and an optimizer 33 which modifies the settings for which the PF is determined by the PF solver, to thereby find an optimum under constraints 34. The constraints 34 may comprise any one or any combination of avoiding overload conditions for lines, transformers, or other power grid components; avoiding bus bar overvoltage conditions; etc. The constraints may respectively be dependent on the distribution system data 23.

The processing system 20 may be operative to implement the OPF processing 31 using any one of a variety of processing techniques. I.e., at least one processing circuit 30 operative to perform the OPF processing 31 may be operative in such a way that the OPF processing 31 can be performed using a first OPF processing technique and/or a second OPF processing technique different from the first OPF processing technique. A selection of which OPF processing technique is to be applied may be made automatically by the at least one processing circuit 30 depending on, e.g., a number of nodes and/or branches of the network topology and/or based on a target runtime within which setpoint determination is to be completed. For illustration, the at least one processing circuit 30 may be operative to determine, based on a dimension of the admittance matrix for the respective distribution system, optionally also based on a number of discrete control variables (such as control setpoints that have binary or integer values) whether the full non-linear power flow problem is to be solved or whether a linearized version is to be solved. The determination may be made further based on a target quality of the results and/or a maximum runtime for the OPF processing. Alternatively or additionally, the processing system 20 may be operative to select the OPF processing technique from a set of supported OPF processing techniques based on distribution system operator (DSO)-specified information. The OPF processing system 20 may be operative to control the HMI to enable the target quality and/or maximum runtime for the OPF processing to be set, and to use the input to select the OPF processing technique. The OPF processing system 20 may also be operative to control the HMI to enable a selection of the OPF processing technique from among the set of supported OPF processing techniques by the DSO.

The results of the OPF processing 31 include settings determined to be optimum in the sense that they are at least approximately at a local maximum or minimum of a target function. Various ways of defining suitable target functions and implementation of the optimization are known to the skilled person. For illustration, and with particular view to transitioning towards more environmentally friendly technologies, the target function may be a function that quantifies emissions (which is a target function to be minimized), real power losses (which is a target function to be minimized), and voltage deviations (which is a target function to be minimized). Other target functions or combinations of such target functions (such as linear combinations) can also be used. For illustration, the target function may comprise a weighted sum of functions quantifying emissions, real power losses, and/or voltage deviations.

The processing system 20 may be operative to perform a setpoint generation 35 to generate control setpoints for distribution grid components or equipment coupled to the distribution grid (collectively referred to as distribution system settings herein). The setpoint generation 35 may be operative to generate and provide output that is dependent on the control setpoints (or other settings). The setpoint generation 35 may be operative to generate and provide output that causes, directly or indirectly, the determined control setpoints to be implemented in the distribution grid control. The control setpoints may comprise control setpoints for time coupling equipment, such as control setpoints for ESSs and/or EV charging stations. The control setpoints may also comprise setpoints for generator unit commitment (GUC) and/or controllable loads.

The processing system 20 is operative such that it is operative to determine both settings for a first distribution system and settings for a second distribution system, irrespective of in which one of the first and second distribution systems the processing system 20 is deployed. The processing system 20 can be operative to not only handle different distribution grid topology, instrumentation, and equipment, but to also handle differences of such fundamental nature as the number of phases of lines and/or feeders and/or whether lines and/or feeders are with or without neutral. Thus, the processing system 20 may be operative to be used in a wide variety of different regions or countries having widely different distribution system implementations (such as different numbers of phases).

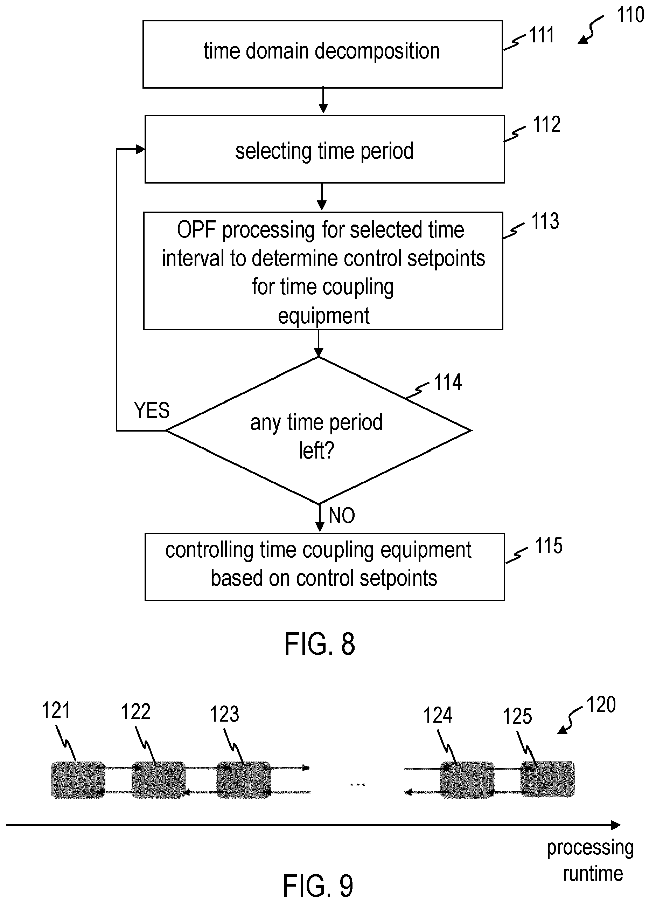

The processing system 20 may be operative to determine settings for the current operating conditions. This determination may be based also on measurements (such as load power and/or generator unit commitment), which may be retrieved via the interface(s) 21. The processing system 20 may additionally or alternatively also be operative to determine settings for future time intervals in a predictive manner. In this case, predictions such as weather forecast(s), future GUCs, and predicted future load powers may be used for determining the settings for the future time intervals. The processing system 20 my be specifically adapted to determine settings (such as control setpoints) for time-coupling equipment, as described in more detail with reference to Figure 8, Figure 9, and Figure 10.

The processing system 20 may be implemented as an apparatus comprising an apparatus housing in which the components illustrated in Figure 1 are accommodated. The processing system 20 may be implemented as a combination of several apparatuses that are communicatively coupled to each other. The processing system 20 may be operative to be used in combination with, and to co-operate with, a control system for at least part of the power grid, such as distribution system control system.

The processing system 20 comprises the at least one processing circuit 30. The at least one processing circuit 30 coupled to the at least one interface 21. The at least one processing circuit 30 is operative to perform the various functions and operations disclosed herein in association with OPF processing and setpoint generation. The at least one processing circuit 30 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

The processing system 20 may comprise an output interface separate from the interface 21 to provide the output or may provide the output via the at least one interface 21. The processing system 20 may be operative to output a command that causes execution, or is otherwise based on, settings determined in the OPF processing 31.

The processing system 20 may be operative to output a command that causes one or several of: provision of the setting(s) (such as a setpoint that implements a change in a power generation level and/or a change in ESS or PV charging station operation) to a distribution system control system; controlling a human machine interface (HMI) to output information on the determined settings; controlling one or several controllable devices of the distribution grid.

The storage system 22 of the processing system 20 may be operative to store distribution system data used in the OPF processing 31 and setting generation 35. The at least one processing circuit 30 may be operative to retrieve the distribution system data 23 and models 24 from the storage system 22 for use in performing the OPF processing 31.

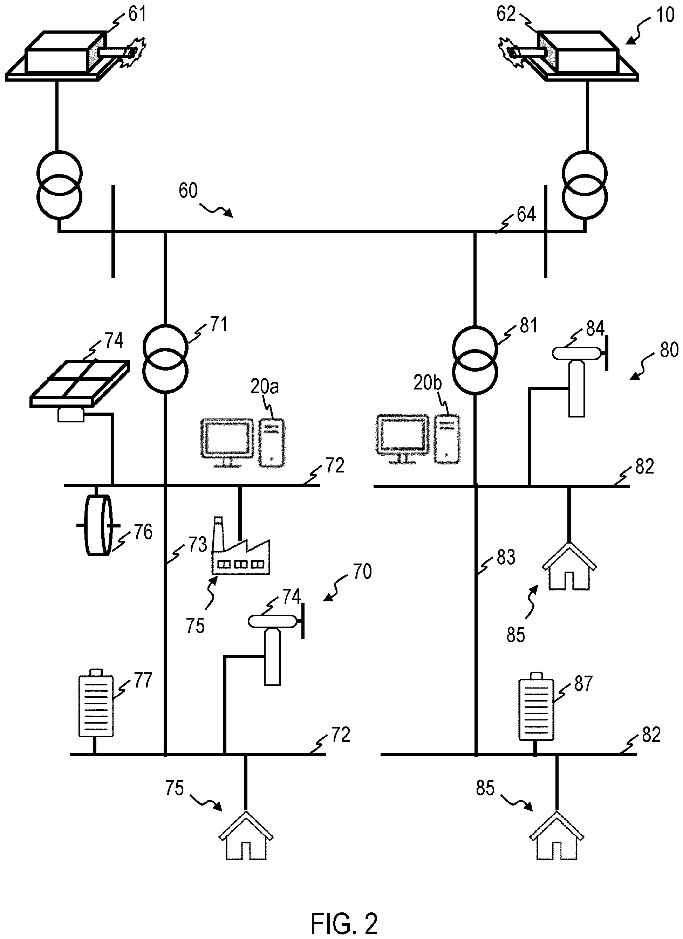

Figure 2 is a schematic representation of a system 10 according to an embodiment. The system 10 comprises generators 61, 62, a power transmission system 61 comprising a transmission line 60, and one or several power distribution systems 70, 80. The power distribution system(s) 70, 80 is/are coupled to, e.g., the power transmission system 60 via transformers 71, 81 that reduce voltage from a first voltage at the transmission level to lower second voltages at buses 72, 82 at the distribution level. The power distribution systems 70, 80 comprise a plurality of lines 73, 83, and a plurality of buses 72, 82. Loads 75, 85 and generators 74, 84 may be connected to at least some of the distribution level buses by means of suitable coupling gear, such as feeders. ESSs, such as battery ESSs 77, 87 and/or kinetic energy ESSs 76 may be connected to at least some of the distribution level buses by means of suitable coupling gear, such as feeders.

The system 10 comprises one or several processing systems 20a, 20b, each associated with a power distribution system and operative to determine which settings are appropriate for, e.g., generator and/or load control and/or time coupling equipment control, in accordance with the techniques disclosed herein. The one or several processing system 20a, 20b may be, or may be comprised by, distribution system control systems that control generators and/or loads and/or time coupling equipment based on the settings determined by the processing systems 20a, 20b.

By determining settings for generators and/or loads and/or time coupling equipment in such a manner that the settings (such as control setpoints) cause the distribution system to operate close to an optimum (as defined by a target function that may be specific to the respective distribution system), distribution grid operation is based on objective criteria. The target function(s) may respectively include functions that indicate impact on the environment, such as contributions indicative of emissions and/or of power lost in operation.

The rapidly increasing number of distributed energy resources (DERs), such as inverter based resources (IBRs), and non-conventional loads (e.g., EV charging stations) on the distribution level can cause several problems in distribution grids including overloads (congestions) and voltage range deviations which may lead to asset damage and potential blackouts. The consequence of ever-increasing presence of DERs, battery storage, and e-mobility at the distribution level is that grid operation based on conventional control strategies may longer be adequate. Thus, the processing system 20, 20a, 20b and methods according to embodiments address a need in the art, namely improving distribution grid control in view of a transition towards more environmentally friendly power systems, which has become more relevant and will continue to become more relevant.

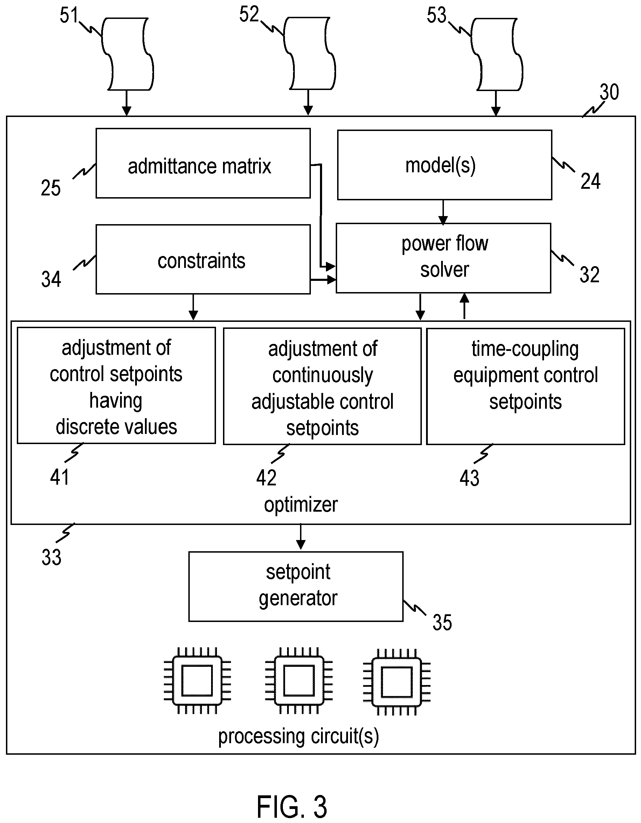

Figure 3 is a schematic block diagram representation of the at least one processing circuit 30. The at least one processing circuit 30 is operative to perform the OPF, using the at least one PF solver 32. Inputs to the PF solver are the admittance matrix 25 (which may be determined on distribution grid topology data 51) and setpoints provided by the optimizer 33. The PF solver 32 solves the equations governing PF for the respective setpoints so that the solution complies with the constraints 34. The PF solver 32 uses the models 24 for the respective distribution grid, such as models for lines and/or feeders that are selected from a set of stored models based on information 52 on the number of phases and/or based on whether the lines or feeder are with or without neutral, respectively. The PF solver 32 may solve the equations using information 53 related to renewables energy generation, such as weather forecast information.

The processing circuit 30 may be operative to determine matrix elements of the admittance matrix based on parameters of lines that are readily known to the DSO, such as line length(s), diameters of cables, materials from which the conductors are made, and similar. The models 24 may accordingly include models that determine, based on the characteristics of the line(s) such as line lengths, cable diameter, material the impedances as required for the impedance matrix. The risk for human error in being introduced when determining the admittance matrix is, thus, further reduced.

The optimizer 33 causes setpoints to be varied, with the PF solver 32 solving the equations defining the power flow problem for the respective setpoints. Adjustments of the setpoints may depend on the results determined by the PF solver 32.

The at least one processing circuit 30 may be operative to use different techniques in the OPF processing, depending on the types of setpoints to be adjusted.

The at least one processing circuit 30 may be operative to adjust control setpoints (for use in performing the PF computation, within the larger OPF processing context) of one, several, or all of:
- setpoints having discrete values (such as binary or integer values);
- setpoints having continuously adjustable setpoint values (e.g., selected from an operation range which may be specified by the constraints 34);
- setpoints of time coupling equipment, which may be intermittently connected to the power grid and intermittently disconnected from the power grid.

Various different processes may be implemented for these different types of setpoints. An adjustment 41 of setpoints having discrete values only may be performed by setting the setpoint values to fixed (and allowed) discrete values, while optimizing over the setpoints for equipment having continuously adjustable setpoints and/or time-dependent coupling configurations. Alternatively, the control setpoints having discrete values may be determined by first treating these setpoints as if they were continuously variable, and subsequently looking for the allowed discrete value closest to the result of the optimization.

An adjustment 42 of setpoints having continuously variable values may be performed using known solution techniques for the OPF problem, such as iterative Newton-Raphson, iterative voltage sweeping, and linearized fast non-iterative processing.

An adjustment 43 of setpoints for time coupling equipment may be performed using a decomposition technique, in which a time domain is decomposed into several shorter time periods and the optimization is performed for each of the time periods. Consistency of the settings between adjacent time periods may be ensured, e.g., by imposing a penalty term for discontinuities in settings into the target function and/or by using techniques such as forward-backward iterations as disclosed in M. Giuntoli et al., "Control of Distribution Grids with Storage using Nested Benders' Decomposition", 21st Power Systems Computation Conference, Porto, Portugal (June 29 - July 3, 2020), January 2021Electric Power Systems Research 190(1):106663 for the case of a single-phase system.

A result of the OPF processing 31 comprises settings, such as control setpoints and/or timing at which time coupling equipment is coupled to and decoupled from the power grid. These settings may be used for distribution system control in various ways.

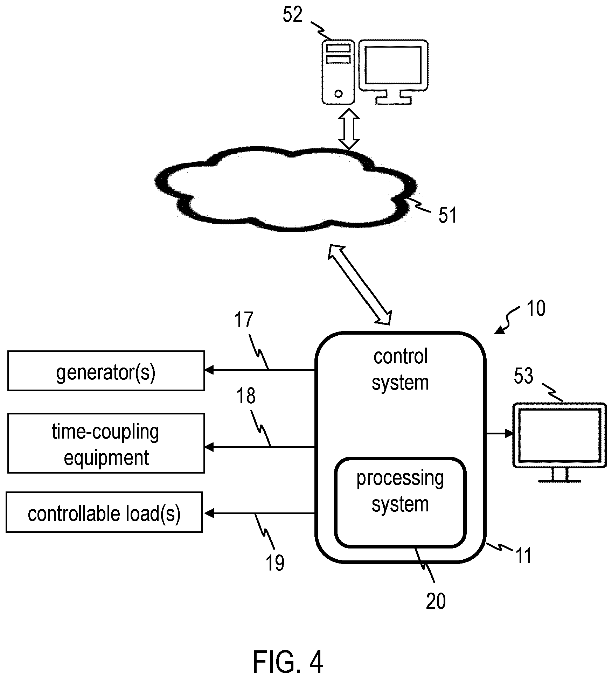

Figure 4 shows an example of a system 10 according to an embodiment. The system 10 comprises a distribution system control system 11. The distribution system control system 11 comprises the processing system 20. The distribution system control system 11 is operative to generate and output commands 17, 18, 19 which cause generator(s), time-coupling equipment, and/or controllable loads to operate in accordance with the settings determined by the processing system 20.

Alternatively or additionally, the results obtained by the processing system 20 may be provided via an HMI 53 coupled to the processing system 20. Thus, the processing system 20 may assist the DSO in performing distribution system control operations.

The results of the processing system 20 may also be communicated to and used by additional processing and/or control resources 52. For illustration, the determined setpoints may be transmitted to a processing and/or control resources 52, via a dedicated communication link (e.g., compatible with with IEC 61850 as in force on the filing or priority date of the application, whichever is earlier) or via a wide area network 51. Thus, the results of the determination of distribution system control setpoints may be shared by the processing system 20 with other distribution system control systems and/or a control system at the transmission level, such as a transmission system operator (TSO) control center. This facilitates coordination of adjustments made in various distribution systems or in distribution and transmission systems.

As already explained, the processing system 20 is operative to perform OPF processing for distribution systems having lines and/or feeders with different numbers of phases and/or with or without neutral. Referring to Figure 2, a distribution system 70 or 80 may comprise sections implemented as single phase system, sections implemented as dual-phase system and/or sections implemented as three-phase system. The processing system 20 has available in the system storage 22 (or can access at a remote data repository) models for distribution grid lines having different numbers of phases, with neutral and without neutral. The processing system 20 has available in the system storage 22 (or can access at a remote data repository) models for feeders having different numbers of phases, with neutral and without neutral. Thus, the processing system 20 can tackle different distribution systems with different number(s) of phases, for example, but also a distribution system having sections with different numbers of phases, and/or having some sections with neutral and some sections without neutral.

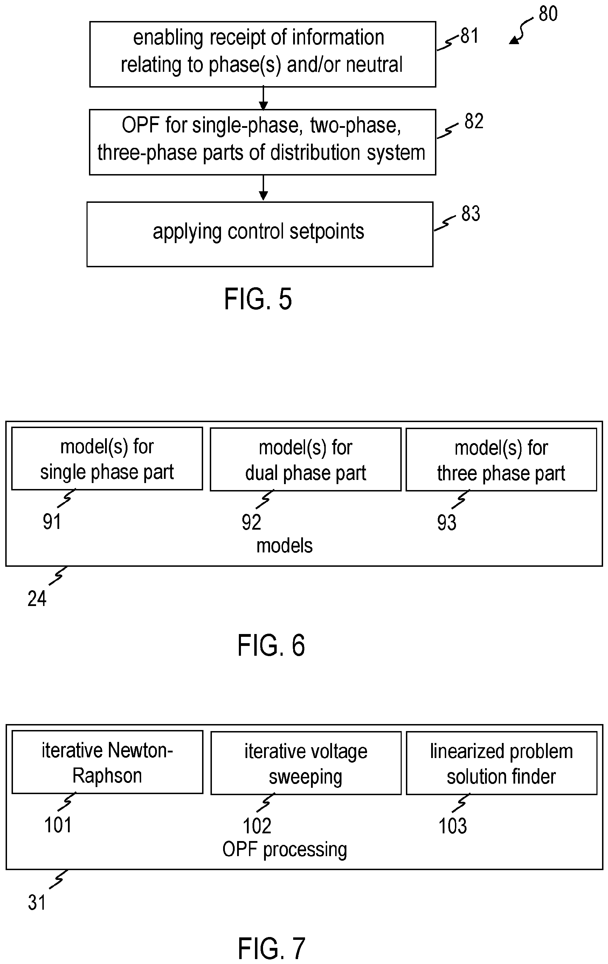

Figure 5 is a flow chart of a method 80. The method 80 may be performed automatically by or using the processing system 20.

At process block 81, the processing system 20 enables receipt of information relating to a number of phase(s) and/or presence or absence of neutral for lines and/or feeders. Enabling receipt may comprise controlling an HMI to allow this information to be input, or processing system configuration data including this information as received at the interface 21.

At process block 82, the processing system 20 performs the OPF for the distribution system which may comprise, for example, sections implemented with different numbers of phases, and/or sections with neutral and sections without neutral. The respective models are available to the processing system 20, e.g., at its local system storage 22.

At process block 83, the processing system 20 causes the determined control setpoints to be applied. This may comprise automatic generation of commands to implement operation in accordance with the determined setpoints, and/or control of an HMI to output the determined setpoints to the DSO.

Figure 6 is a block diagram illustrating that the models 24 include models for lines and/or feeders implemented in a single phase part 91, implemented in a dual phase part 92, or implemented in a three phase part 93 of the distribution system. The at least one processing circuit 30 is operative to use the model selected from models 91-93 respectively required, depending on whether lines and/or feeders are implemented as single phase, dual phase, or three phase components. While not explicitly shown in Figure 6, the models 24 may respectively include these models for lines with and without neutral, and for feeders with and without neutral. This allows the processing system 20 to be operative in association with a wide variety of different distribution system types.

Figure 7 is a block diagram illustrating that the processing system 20 may be operative to select and use any one of several OPF processing techniques for which it is configured. For illustration, the processing system 20 may be operative to determine the settings for distribution system operation as solution of the OPF with a first, second, and optionally third OPF processing technique. As examples, Figure 7 illustrates an iterative Newton-Raphason OPF processing 101, an iterative voltage sweeping OPF processing 102, and a linearized problem solution finder 103. Alternative, additional, or fewer OPF processing techniques may be provided for execution by the processing system 20. The different OPF processing techniques may be distinguished from each other by the result quality and processing runtime requirements.

A selection of which OPF processing technique is to be applied may be made automatically by the at least one processing circuit 30 depending on, e.g., a number of nodes and/or branches of the network topology and/or based on a target runtime within which setpoint determination is to be completed. For illustration, the at least one processing circuit 30 may be operative to determine, based on a dimension of the admittance matrix for the respective distribution system, optionally also based on a number of discrete control variables (such as control setpoints that have binary or integer values) whether the full non-linear power flow problem is to be solved or whether a linearized version is to be solved. The determination may be made further based on a target quality of the results and/or a maximum runtime for the OPF processing. Alternatively or additionally, the processing system 20 may be operative to select the OPF processing technique from a set of supported OPF processing techniques based on distribution system operator (DSO)-specified information. The OPF processing system 20 may be operative to control the HMI to enable the target quality and/or maximum runtime for the OPF processing to be set, and to use the input to select the OPF processing technique. The OPF processing system 20 may also be operative to control the HMI to enable a selection of the OPF processing technique from among the set of supported OPF processing techniques by the DSO.

In view of the increased deployment of time coupling equipment such as BESS, kinetic energy ESS, and PV charging stations, the processing system 20 is operative to determine settings for the time coupling equipment. The processing system 20 may be operative to determine such settings irrespective of whether the feeders, converters or inverters coupling the time coupling equipment to the distribution grid are implemented as single phase, dual phase, or three phase equipment.

Generally, in order to determine settings for the time coupling equipment, the processing system 20 may be operative to use a time decomposition technique.

Figure 8 is a flow chart of a method 110. The method 110 may be performed automatically by or using the processing system 20 to determine settings for the time coupling equipment.

At process block 111, a time domain decomposition is performed. A time period may be split into several shorter time periods.

At process block 112, a time period is selected. At initialization, a first time period may be selected.

At process block 113, OPF processing is performed for the selected time period to determine control setpoints for the time coupling equipment. Forward--backward iterations as disclosed in M. Giuntoli et al., "Control of Distribution Grids with Storage using Nested Benders' Decomposition", 21st Power Systems Computation Conference, Porto, Portugal (June 29 - July 3, 2020), January 2021Electric Power Systems Research 190(1):106663 for the case of a single-phase system may be used to ensure consistency of the solutions for the various time periods.

At process block 114, it is determined whether there are unaddressed time periods left. If time periods are left, the method returns to process block 112.

At process block 115, the time coupling equipment is controlled based on the control setpoints obtained using the time decomposition technique.

While Figure 8 shows a process for sequentially addressing the different time periods, parallel processing may also be used.

Figure 9 illustrates sequential processing 120 for determining the settings for time coupling equipment for several time periods 121-125. Backward-forward iterations are schematically illustrated by the arrows extending between adjacent blocks.

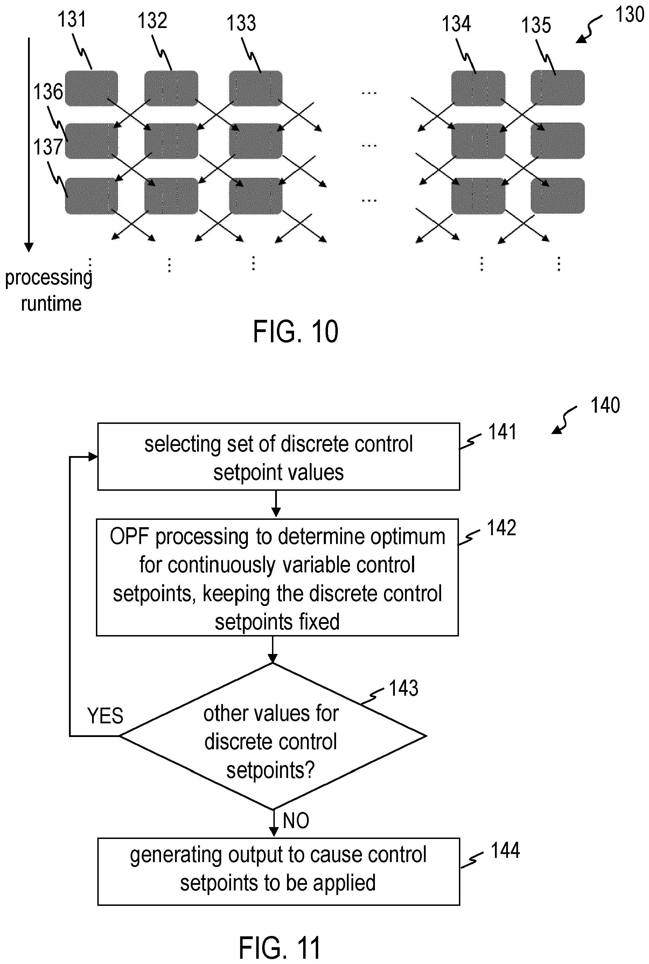

Figure 10 illustrates parallel processing 130 for determining the settings for time coupling equipment for various time periods. A first set of settings 131-135 for the various time periods may be determined concurrently. As the processing runtime progresses, improved settings 136, 137 may be determined to update the previously determined settings for any of the time periods. Results for adjacent time periods obtained in a previous runtime operation may be used for the subsequent runtime operation.

The processing system 20 may be operative to not only determine control setpoints for setpoints having continuously variable setpoint values (i.e., for setpoints which may have any value in an allowed range that may be predefined), but also for discrete settings (such as binary or integer settings). Tap changer positions are an example for the latter type of settings. Various approaches may be used to determine optimum values for such setpoints having discrete allowed setpoints. In one implementation, the discrete setpoints may initially be treated as being continuous variables. One of the allowed discrete values may ultimately be selected, using the results of the optimization in which discrete setpoints are treated as if they were continuous. For illustration, rounding techniques may be used to find the closest allowed discrete setpoint.

It has turned out that particularly good distribution grid control results when using an iterative approach in which the permitted discrete values of setpoints having discrete values are set, OPF processing is performed to determine the values of the continuously variable control setpoints that minimize the target function for this respective set of fixed discrete values of setpoints having discrete values, and this process is then repeated while varying the values of one or several of the setpoints having discrete values. The final result is selected based on the values of the target function determined for any of the discrete values sets (with the continuously variable control setpoints having the values found to be optimum for the respective discrete values set).

Figure 11 is a flow chart of a method 140. The method 140 may be performed automatically by or using the processing system 20.

At process block 141, a set of values is selected for control setpoints having discrete values (such as binary or integer).

At process block 142, the OPF processing is performed to determine the values of the settings having continuously variable values, keeping the set of values for the control setpoints having discrete values fixed.

At process block 143, it is determined whether process blocks 141, 142 are to be iterated for other values of the control setpoints having discrete values. It is not required (but possible, albeit computationally potentially expensive) to iterate the process through all possible combinations of discrete values of the control setpoints. Systematic strategies may be used to sample only a fraction of the parameter space.

At process block 144, output is generated to cause the control setpoints to be applied, which have been determined to be optimal for any set of discrete control setpoint values and continuous control setpoint values.

The processing system 20 is operative to determine settings for distribution systems having a wide variety of different configurations. To this end, the models 24 may comprise models for lines and feeders of various configurations (as already explained with reference to Figure 6). The models 24 may comprise models for a wide variety of different equipment configurations, such as models for various transformer, generator, load, ESS, and/or EV charging systems, and/or of other equipment that can be coupled to the distribution grid.

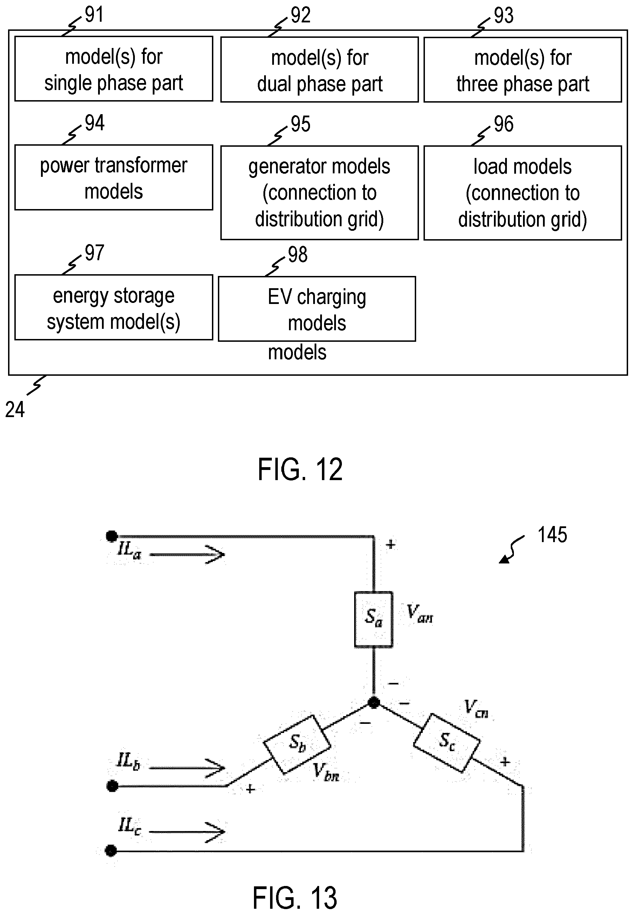

Figure 12 shows a schematic block diagram of the models 24. It should be understood that alternative, additional, or fewer models may be used in a processing system 20.

The models 24 comprise models 91, 92, 93 for lines and/or feeders with different configurations (such as different number(s) of phases and/or with and without neutral). Different types of distribution grids are used in different geographic areas such as America, Africa, and Europe. Electric branches configurations can be very different (in terms of number phases, neutral and ground state). The models 91-93 provide a generic model. From geometric data and conductor/cable configuration parameters, the processing system 20 is operative to determine the longitudinal and transversal admittance per length unit. The processing system 20 may be operative to determine, in case of 3 phases and 1 neutral conductor, 4x4 matrices of admittance (full). The processing system 20 may be operative such that a Kron reduction may be applied, to obtain 3x3 matrices for the primitive matrices (again in case of 3 phases and 1 neutral conductor). The processing system 20 may be operative to apply Carson theory to take into account a current mirror effect in the soil.

The models 24 may comprise branch models 94 to model power transformers. To guarantee interoperability of the processing system 20 with the wide variety of different transformer configurations, the models 94 may comprise (referring for illustration to a three phase system):
- primary and secondary type of connection,
- primary and secondary voltage level,
- leakage admittance (e.g., per unit leakage admittance),
- various configurations, such as
   ∘ delta
   ∘ star (with or without round)
   ∘ open delta or star.

The specific implementations of the transformer models in each of these cases are known to the skilled person.

The models 24 may comprise generator and/or load models, and/or models for their interconnection to the distribution grid.

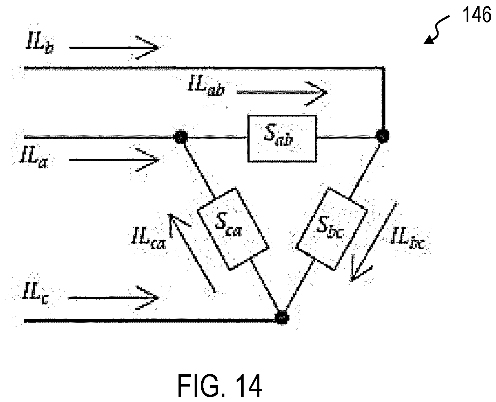

The models 24 may comprise models for star connected (grounded or without ground) or delta connected connections of loads and/or generators to the distribution grid. These two configurations are shown exemplarily in Figure 13 and Figure 14.

The models 24 may comprise models 95 for generators. The generator models 95 may comprise models for active and, optionally, reactive power. The generator models 95 may comprise, in case of a multi-phase generator, models for a generator in which the power output for each phase has
- an independent setpoint, or
- a same setpoints for all phases.

The models 24 may comprise models 96 for loads. The models 96 for loads may comprise models for
- balanced and
- unbalanced
loads. The models 96 for loads may comprise models for three phase, two phase, or single phase (with or without neutral) configurations. The models 96 for loads may comprise different Z/P models, such as constant impedance (Z), constant current (I), constant real and reactive power (P), any combination of these (delta and/or star).

The models 24 may also comprise models 97 for ESSs (such as models modelling feeders with different numbers of phases, modelling different types of ESS setpoints) and models 98 for EV charging stations (such as models modelling the feeder configurations).

A selection from among the various models is made, depending on the specific distribution system for which settings are determined by the processing system 20.

An important effect attained by the techniques disclosed herein is that the processing and control systems and methods disclosed herein may be operative to determine settings for presently existing or expected future situations (such as weather conditions and/or load levels). Thereby, a series of control actions may be determined (e.g., in the form of a timeseries of setpoints) that are optimal in the sense that they minimize or maximize the target function.

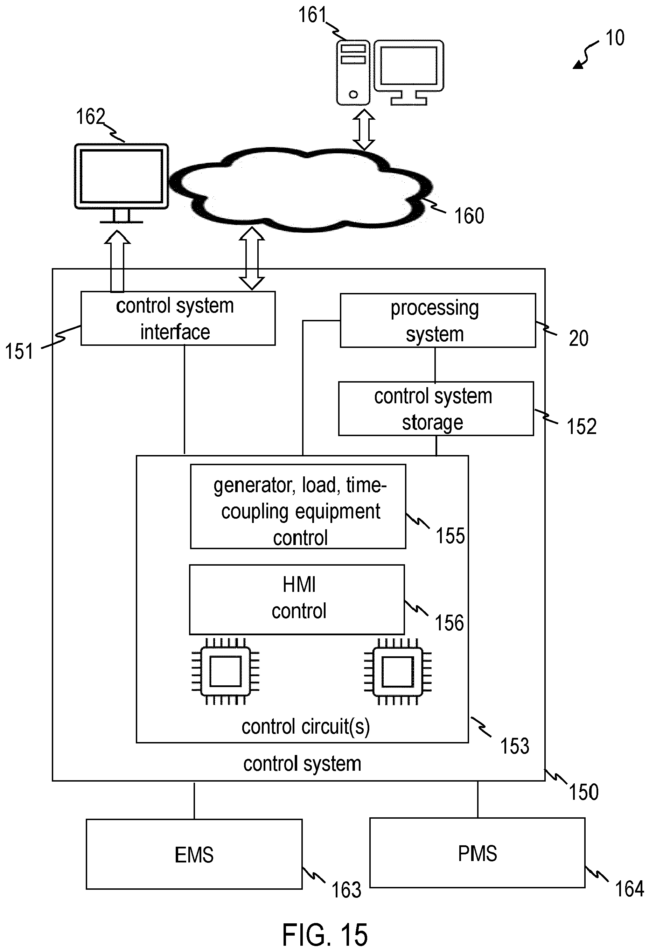

Figure 15 is a block diagram of a system 10 according to an embodiment. The system 10 comprises the processing system 20 which may be operative according to any one of the embodiments disclosed herein. The processing system 20 may be comprised by or coupled to a control system 150.

The system 10 comprises at least one server 161 operative to provide forecast information which has the potential of affecting power generation and/or load power. The forecast information may comprise whether forecast information, in particular if the power grid has a renewables penetration. The forecast information may comprise load forecast information which may be based on historical data. The control system 150 may be operative to store the forecast information or information derived therefrom in a control system storage 152. The control system storage 152 may also store information on setpoints for generators and/or loads, determined in the OPF processing performed by the processing system 20.

The processing system 20 and/or a control system 150 of the system 10 may be communicatively coupled with the at least one server 161 over a dedicated network or a wide area network 160 or the internet. The processing system 20 and/or the control system 150 may be operative to retrieve the forecast information from the at least one server 161 and to use the forecast information in combination with the OPF processing 31 performed by the processing system 20 for determining setpoints.

The system 10 may comprise a human machine interface (HMI) 162 which may be communicatively coupled with the processing system 20 and/or the control system 150. The processing system 20 and/or the control system 150 may be operative to cause setpoints to be output via the HMI 162. For illustration, the processing system 20 may cause the setpoints determined by the OPF processing to be output via the HMI 162 for further use. Alternatively or additionally, the processing system 20 and/or the control system 150 may cause a confirmation to be output via the HMI 162, indicating that control actions have been taken to cause the distribution system to operate in accordance with the settings determined by the OPF processing 31.

The control system 150 or the processing system 20 may be operative to provide the output of the OPF processing (which may comprise one or several setpoints for at least one generator and/or at least one load and/or at least one time coupling equipment of the power distribution system) to a control module 155 implemented by at least one control circuit 153. The at least one control circuit 153 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

The at least one control circuit 153 may be operative to effect generator and/or load and/or time coupling equipment control action to be performed based on and in accordance with the OPF processing performed by the processing system 20.

The at least one control circuit 153 may be operative to perform a power generator unit and/or load and/or time coupling equipment control 155. The at least one control circuit 153 may be operative to adjust, for example, power generator unit commitment based on a result of the OPF processing. The at least one control circuit 153 may be operative to perform a control action acting on, e.g., at least on the power generation units, at least one rotating energy storage system, and/or at least one PV charging system (or other time coupling equipment). The control action may be selectively taken depending on the result of the OPF processing.

When the distribution system has renewables penetration, the at least one control circuit 153 may be operative to determine adjusted settings for an energy management system (EMS) 163 and/or power management system (PMS) 164. The system 10 may comprise the EMS 163 and/or the PMS 164. The control system 150 may be operative to cause the adjusted settings to be used by the EMS 163 and/or the PMS 164 in accordance with the OPF processing.

The at least one control circuit 153 may be operative to perform an HMI control 156. The at least one control circuit 153 may cause an alarm, warning, or other information based on the OPF processing to be output via the HMI 162.

Various effects and advantages are attained by the processing system, processing method, control system, and control method according to embodiments. The systems and methods can determine settings for a distribution system (distribution grid and equipment connected thereto), with the settings being determined in an objective manner using OPF processing. The settings determined using the OPF processing may be determined for any one or any combination of target functions, including target functions that reduce emissions, reduce power transfers between different regions, reduce voltage variations, and/or similar.

Embodiments may be used in association with a distribution system having renewables penetration, such as distribution system comprising renewable energy systems (such as DERs), without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A processing system (20) for distribution system control, the processing system (20) comprising:
a storage system (22) operative to store topology data for a distribution grid (70; 80);
at least one processing circuit (30) operative to
retrieve the topology data from the storage system (22);
identify phases for branches and nodes of the distribution grid (70; 80);
perform an optimal power flow, OPF, processing to solve an OPF problem of determining distribution system settings that optimize a target function of the OPF problem, wherein the OPF processing (31) is performed based on the topology data and the identified phases; and
generate output that is provided via at least one output interface (21) based on the determined distribution system settings;
wherein the at least one processing circuit (30) is operative to enable a number of phases to be specified for performing the OPF processing (31).

2. The processing system (20) of claim 1, further comprising an input interface, wherein the at least one processing circuit (30) is operative to control the input interface to enable a distribution system operator to configure a number of the phases for each branch and for each node.

3. The processing system (20) of claim 1 or claim 2, wherein the at least one processing circuit (30) is operative to identify the phases based on a machine-readable configuration description of the distribution grid (70; 80).

4. The processing system (20) of any one of the preceding claims, wherein the at least one processing circuit (30) is operative to determine admittances of lines of the distribution grid (70; 80) based on the identified phases and one, several or all of the following parameters of the lines:
electrical characteristics;
geometric characteristics;
materials;
relative distance to ground;
wherein the at least one processing circuit (30) is operative to perform the OPF processing (31) based on the determined admittances.

5. The processing system (20) of any one of the preceding claims, wherein the storage system (22) is operative to store a set of power equipment models related to an equipment of the or coupled to the distribution grid (70; 80), wherein the processing system (20) is operative to select a power equipment model from the set of power equipment models (24) based on a configuration of the distribution grid (70; 80) and to perform the OPF processing (31) based on the selected power equipment model, optionally wherein the equipment of the distribution grid (70; 80) is selected from a group consisting of a multi-phase power transformer, a connection of a load in a distribution feeder, a connection of a generator in a distribution feeder, a load, a generator.

6. The processing system (20) of any one of the preceding claims, wherein the distribution grid (70; 80) comprises time-coupling equipment that is intermittently connected via a feeder, and wherein the at least one processing circuit (30) is operative such that the determined distribution system settings comprise settings for the time-coupling equipment (76, 77, 87), optionally wherein the time-dependent coupling equipment (76, 77, 87) comprises at least one of an energy storage system (76, 77, 87), an electromobility charging equipment, and/or optionally wherein the settings for the time-coupling equipment (76, 77, 87) comprise settings for a connection and disconnection of the time-coupling equipment.

7. The processing system (20) of claim 6, wherein the OPF processing (31) comprises a multi-period OPF processing (31), wherein the at least one processing circuit (30) is operative to perform a time-domain decomposition of the OPF problem into multiple periods to determine the settings for the time-coupling equipment,
optionally wherein the at least one processing circuit (30) is operative to solve the multi-period OPF sequentially for the multiple periods, or
optionally wherein the at least one processing circuit (30) is operative to solve the multi-period OPF in parallel for the multiple periods.

8. The processing system (20) of any one of the preceding claims, wherein the at least one processing circuit (30) is operative such that the determined distribution system settings comprise discrete settings, wherein the at least one processing circuit (30) is operative to determine optimum values for the discrete settings using an iterative technique comprising iterations over allowed values for the discrete settings.

9. The processing system (20) of claim 8, wherein the iterative technique comprises a nested iterative technique, wherein the nested iterative technique comprises an outer iteration over the allowed values for the discrete settings and an inner iteration, wherein the at least one processing circuit (30) is operative to perform the inner iteration to determine optimum values for settings that have continuous allowed values, wherein the at least one processing circuit (30) is operative to perform the inner iteration while keeping the values for the discrete settings fixed.

10. The processing system (20) of any one of the preceding claims, wherein the at least one processing circuit (30) is operative to perform at least two different optimization procedures (101, 102, 103) in the OPF processing (31), wherein the processing system (20) is operative to enable a selection of an optimization procedure from the at least two different optimization procedures (101, 102, 103).

11. The processing system (20) of any one of the preceding points, wherein the determined settings comprise setpoints for distribution system equipment (74, 76, 77, 84, 87).

12. The processing system (20) of any one of the preceding claims, wherein the output comprises commands operative to cause distribution system equipment (74, 76, 77, 84, 87) to operate in accordance with the determined distribution system settings.

13. A system, comprising:
a distribution grid (70; 80),
a distribution grid control system (11; 150) comprising the processing system (20) of any one of the preceding claims, and
distribution system equipment (74, 76, 77, 84, 87) operative to operate in accordance with the output provided by the processing system (20).

14. A processing method, comprising:
retrieving, by at least one processing circuit (30), topology data for a distribution grid (70; 80);
identifying, by the at least one processing circuit (30), phases of the distribution grid (70; 80);
performing, by the at least one processing circuit (30), an optimal power flow, OPF, processing to determine distribution system settings, wherein the OPF processing (31) is performed based on the topology data and the identified phases; and
generating, by the at least one processing circuit (30), output provided via at least one output interface for control of a distribution system comprising the distribution grid (70; 80), the output being based on the determined distribution system settings,
wherein the method further comprises enabling, by the at least one processing circuit (30), a number of phases to be specified for performing the OPF processing (31).

15. The processing method of claim 14, which is performed by the processing system (20) of any one of claims 1 to 12 or the system of claim 13.
